# EUROPEAN PATENT SPECIFICATION

(11) **EP 2 585 297 B1**
(45) Date of publication and mention of the grant of the patent: **13.06.2018**
(21) Application number: 11797635.7
(22) Date of filing: 16.06.2011
(51) Int. Cl.: B32B 27/08, B32B 27/32, B32B 27/36, B65D 77/20, B32B 7/06, B32B 7/10

(54) **A SHEET, A METHOD OF MAKING AND USING A SHEET AS A LID FOR PACKAGES**
BLECH, VERFAHREN ZU SEINER HERSTELLUNG UND VERWENDUNG DES BLECHS ALS DECKEL FÜR VERPACKUNGEN
FEUILLE, PROCÉDÉ DE FABRICATION ET D'UTILISATION D'UNE FEUILLE COMME COUVERCLE POUR EMBALLAGES

(30) Priority: 09.02.2011 DK 201100083; 22.06.2010 DK 201000545
(43) Date of publication of application: 01.05.2013
(73) Proprietor: Danapak Flexibles A/S, 4200 Slagelse (DK)
(72) Inventor: JOHANSEN, Peter, DK-5000 Odense C (DK)
(74) Representative: AWA Denmark A/S
(86) International application number: PCT/DK2011/000063
(87) International publication number: WO 2011/160627

(56) References cited:
- EP-A1- 1 990 187
- EP-A1- 2 108 507
- WO-A1-00/13887
- WO-A1-98/25760
- WO-A1-98/25760
- GB-A- 2 370 808
- JP-A- 7 081 010
- JP-A- H02 205 574
- JP-A- 2001 019 023
- JP-A- 2008 024 328
- US-A1- 2006 105 166
- US-A1- 2009 004 505

## Description

### The prior art

The invention relates to a method of making a punched sheet lid according to the introductory portion of claim 1 as well as a punched sheet lid made according to the method and use of such a punched sheet lid as a lid of a polypropylene container.
WO 98/25760 A1 discloses a sheet laminate, where the sheet is made by laminating two sheets containing several separate layers together. The sheet laminate may be used as a lid on containers, said sheet being welded to the edge of the container. EP2108507 discloses a method of making a laminate used as reclosable lid on plastics tray, that involves laminating a pressure sensitive adhesive layer and a protective layer on a base sheet to form a material followed by applying an optional primer and an optional welding layer thereon. Owing to the selection of material and the laminated structure with many layers in the two sheets in the laminate, the known type of sheet will not possess a sufficient rigidity to be suitable for the punching for lids before they are applied to the container, as a lid of this type will typically curl after the punching.
Sheets are also known in various materials and are used as a lid on packages, e.g. cups and bottles, for the packaging of especially milk products, salads, pâtés, etc. The lid may be made of Al sheet, to which a layer of welding lacquer has been applied in order for it to be able to adhere to the package.
This type of lid, however, is not transparent, which is a widespread wish among consumers.
When using a PET sheet which is transparent, a layer of welding lacquer has to be applied, which, since it is milky, is applied only to the rim where the welding to the lid is to take place in order not to destroy the transparency.

The drawback of this application of welding lacquer is that it has to be applied precisely, either to the punched sheet lids or in an assembled form to a web of sheet in connection with the actual closure of the package.

This adds to the costs, and, in any event, the welding lacquer leaves a visible rim along the lid edge, which is an aesthetic drawback.

GB 2370808 A and EP 2108507 A1 disclose sheet lids comprising a PP layer and a pressure sensitive adhesive (PSA) for manufacture of resealable packages.

### The object of the invention

It is the object of the invention to remedy these drawbacks and deficiencies of the use of a PET sheet in connection with PP packages, and this is achieved according to the invention by a method according to claim 1.

The sheet lid made by the method comprises a transparent polyester sheet (PET), where an additional layer is applied onto the transparent polyester sheet (PET) in the form of a coextruded layer of a polyolefin layer and a PP polymer layer to form the sheet, said polyolefin layer being disposed between the transparent polyester sheet (PET) and the PP polymer layer.

First and foremost, this ensures that complete transparency is provided, even over the weld. Further, a frequently considerable waste of material is avoided, since there are no special requirements with respect to the position of the weldable coating, as this is present everywhere on the sheet. Finally, the coating of the transparent PET sheet ensures that the punched lid possesses a suitable rigidity, which prevents the lid from curling, thereby making it possible to punch lids.
Further, it is very advantageously ensured that the expensive printing processes, where a layer of welding lacquer has to be applied, are avoided.

All these factors contribute to simplifying and thereby reducing the costs of the sheet, which, as mentioned, has been given complete transparency.
Finally, the extrusion of the welding layer means that this lid sheet is stronger than a corresponding one provided with welding lacquer, thereby allowing the thickness of the PET sheet to be reduced correspondingly, thus achieving a saving of weight and material of about 15%.
The polyolefin layer is a polyethylene (PE) layer, preferably in the form of a homopolymer or a copolymer of ethylene, which contains propylene units in one embodiment, and that the coextrusion of the polyolefin layer/PE layer and the PP polymer layer onto the transparent polyester sheet (PET) takes place such that the polyolefin layer, such as the PE layer, is disposed between the transparent polyester sheet (PET) and the PP polymer layer.

When a primer is applied to the transparent polyester sheet (PET) prior to the application of the coextruded polyolefin layers, including PE layers, and PP layers, an enhanced adhesion is achieved between the PET layer and the PE layer. The enhanced adhesion between the PET layer and the PE layer allows the delamination to be controlled, said delamination taking place between the polyolefin layer or the PE layer and the PP layer.
When the PP layer is disposed against the PP package, safe fusion and thereby tightly fitting assembly of lid and container are achieved.

When using a PET sheet with a thickness of min. 23 µm and the applied coextruded layer with an overall weight of min. 8 g/m², corresponding to a thickness of min. 9 µm, a relatively inexpensive and material-saving lid sheet is achieved.

The sheet is punched for lids, and finally it is expedient to use the sheet lid for welding to containers and the like, in that the sheet is punched to the final shape of the sheet lid prior to the welding to the container, said sheet lid being welded to the container with the PP layer, which constitutes a welding layer facing toward the container, and that the lid, by a subsequent separation from the container by a pull in the sheet lid, causes the PE layer to remain on the PET sheet and the PP layer to remain on the PP cup, as the PE and PP layers delaminate. This ensures that when the sheet is pulled off the container, a totally precise delamination of the PE layer and the PP layer will take place, thereby ensuring that the sheet is pulled off without the lid being torn to pieces.

### The drawing

An example of a method of making a sheet lid according to the invention and its use will be described more fully below with reference to the drawing, in which
- fig. 1: shows a cup with a lid sheet prior to the welding-together, and
- fig. 2: shows a sectional view of the cup and the lid sheet after pulling-off, opening, seen in the direction II - II in fig. 1.

### Description of an exemplary embodiment

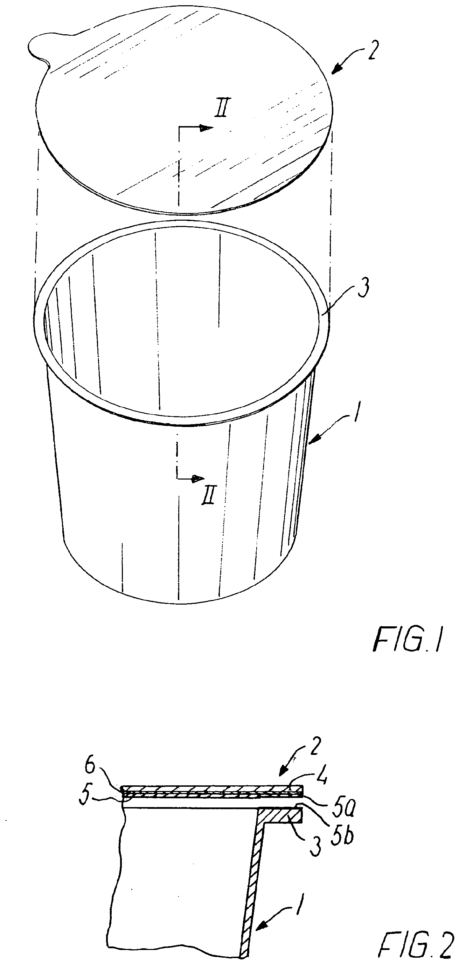

The example shown in fig. 1 consists of a cup 1 which is made of PP.

The cup may be of the type which is known as a package for yoghurt and similar milk products. But it may also be a cup for salad foods or a bottle for milk or soft drinks.
In the example shown, the package 1 is provided with an upper rim 3, which is e.g. plane on the upper side.
When this cup 1 has been filled with its contents, it has to be closed with a lid 2. This lid 2 has preferably been punched in advance and is thus adapted to the opening of the cup 1.

This lid 2, which consists of a sheet laminate, is shown in a sectional view in fig. 2. It comprises a base sheet 4 of PET, which is transparent, and may have a thickness of between 23 and 50 µm. The thickness is adapted to the need for strength, barrier properties, size, etc.

On this base sheet 4, a layer PE, which is designated 5a, and a layer of PP, which is designated 5b, are provided by coextrusion. The latter constitutes a welding layer which is intended to be welded together with the rim portion 3 of the PP cup. The PE layer 5a may be a homopolymer or a copolymer of ethylene - a suitable ethylene copolymer contains propylene units - and will just be called the PE layer. The PP layer 5b may likewise be a homopolymer or a copolymer of propylene ethylene units - a suitable copolymer may contain ethylene units - and will be called the PP layer.
These two layers 5a and 5b preferably have an overall amount of between 8 and 20 g/m², or corresponding to about 9 - 22 µm. The PE layer preferably has a thickness of 5 - 15 g/m², corresponding to about 5.5 - 17 µm, and the PP layer preferably has a thickness of 4 - 6 g/m², or corresponding to about 4.3 - 6.5 µm.

In a preferred embodiment, the base sheet 4 of polyester PET has applied thereto a primer 6, which ensures enhanced adhesion between the polyester (PET) in the base sheet 4 and the PE layer 5a in the coextruded layer 5, which is applied onto the base sheet 4. The preferred primer is acrylic-based and contains polyethyleneimine (PEI), where especially PEI is responsible for the enhanced adhesion between the layers of PET and PE. The limit value of the adhesion is not quite clear as yet, but it is expected to be within 2 - 5 N for a 15 mm wide test strip.

An alternative embodiment of making this sheet 2 comprises extrusion of a base sheet 4 and, by coextrusion, the creation of a first layer 5a and an additional layer 5b, said layers being put together to form the lid sheet 2.

It is preferred that the lid sheet is calendered immediately after the application of the coating to the transparent PET sheet.

These methods provide the advantage that the sheet laminate 2 will be transparent and will be weldable in its full extent. Thereby, any lid shape and dimension may be punched from a roll of sheet, as the lid may be adapted to the size and shape of the package.

In connection with the filling of packages, e.g. cups, in a filling machine, the lid is applied subsequently by application and welding to the rim portion 3.

When the package has thus been filled and closed with a lid 2, the user will be able to pull off the lid by pulling the lid flap, as indicated in fig. 2.

Hereby, the two layers 5a and 5b, PE and PP, respectively, will be separated, delaminated, in such a manner that the pullin-off, the opening, is controlled and totally precise.

Since the two layers 5a and 5b are relatively stiff, the dimensions of the base sheet 4 may be reduced, thus saving weight as well as consumption of material. Moreover, the enhanced rigidity of the lid sheet means that the punched lids do not curl after the punching.

Optionally, an additional layer with print/colour may be applied in a generally known manner, either before or after the punching of the lids, just as an additional barrier layer may optionally be applied to the lid sheet, e.g. prior to the coating and/or punching.

## Claims

1. A method of making a punched sheet lid (2) for packages in the form of cups of polypropylene from a sheet, wherein said sheet has complete transparency and is comprising a completely transparent polyester sheet (4), which is a PET sheet,
wherein the method of making a punched sheet lid is **characterized in that**,
- the said sheet is made by coating the completely transparent PET sheet (4) with a coextruded additional layer (5) by coextruding a polyethylene layer (5a) and a polypropylene layer (5b) onto the said PET sheet (4), and wherein the coextrusion of the polyethylene layer (5a) and the polypropylene layer (5b) onto the said PET sheet (4) takes place such that the polyethylene layer (5a) is disposed between the PET sheet (4) and the polypropylene layer (5b),
- the said method comprising the step of punching the sheet lid (2) to the final shape of the sheet lid (2) so that the said polypropylene layer (5b) can be welded to the said polypropylene cup, said polypropylene layer adhering to the said polypropylene cup.

2. A method according to claim 1, **characterized in that** the polyethylene layer is in the form of a homopolymer or a copolymer of ethylene.

3. A method according to claim 2, **characterized in that** the polyethylene layer is a copolymer of ethylene, which contains polypropylene units.

4. A method according to any one of claims 1 - 3, **characterized in that** a primer layer is applied to the said PET sheet prior to the application of the coextruded polyethylene layer (5a) and polypropylene layer (5b).

5. A method according to any one of claims 1 - 4, **characterized in that** the punched sheet lid (2) is welded to a polypropylene package (1), said polypropylene layer (5b) adhering to the polypropylene package (1).

6. A method according to any one of claims 1 - 5, **characterized in that** the said PET sheet (4) is given a thickness of between 23 and 50 µm, and that the coextruded layer (5) is given an amount of between 8 and 20 g/m², corresponding to a thickness of between 9 and 22 µm.

7. A method according to any one of claims 1 - 6, **characterized in that** the sheet lid (2) is punched in advance of closing a cup and is thus adapted in size and shape to the opening of the cup.

8. A punched sheet lid obtained by the method according to any one of claims 1 -7.

9. Use of a punched sheet lid made by the method according to any one of claims 1 - 8 as a lid of a container (1) of polypropylene, the sheet lid (2) being punched to the final shape of the sheet lid (2) prior to the welding to the container (1), said sheet lid (2) being welded to the container (1) with the polypropylene layer (5b), which constitutes a welding layer, facing toward the container (1), the lid, at a subsequent separation from the container (1) by a pull in the sheet lid (2), causing the polyethylene layer (5a) to remain on the PET sheet (4) and the polypropylene layer (5b) to remain on the polypropylene cup (3), as the polyethylene and polypropylene layers (5a and 5b) delaminate.

## Patentansprüche

1. Verfahren zum Herstellen eines gestanzten Foliendeckels (2) für Verpackungen in der Form von Bechern aus Polypropylen aus einer komplett transparente Folie, wobei die Folie eine komplett transparente Polyesterfolie (4) umfasst, welche Polyesterfolie eine PET-folie ist,
wobei das Verfahren zum Herstellen eines gestanzten Foliendeckels **dadurch gekennzeichnet ist, dass**
die Folie durch Beschichten der komplett transparenten PET-Folie (4) mit eine zusätzliche koextrudierten Schicht (5) hergestellt wird, indem eine Polyethylenschicht (5a) und eine Polypropylenschicht (5b) auf die Folie koextrudiert werden, wobei das Koextrudieren der Polyethylenschicht (5a) und der Polypropylenschicht (5b) auf die PET-Folie (4) so erfolgt, dass die Polyethylenschicht (5a) zwischen der Polyesterfolie (4) und der Polypropylenschicht (5b) angeordnet ist, wo das Verfahren den Schritt des Stanzens des Foliendeckels (2) in die fertige Form des Foliendeckels (2) umfasst, so dass die Polypropylenschicht (5b) dafür geeignet ist, auf den Polypropylenbecher geschweißt zu werden, so dass die Polypropylenschicht (5b) am Polypropylenbecher haftet.

2. Verfahren gemäß Anspruch 1, **dadurch gekennzeichnet, dass** die Polyethylenschicht in der Form eines Homopolymers oder eines Copolymers von Ethylen vorliegt.

3. Verfahren gemäß Anspruch 1 oder 2, **dadurch gekennzeichnet, dass** die Polyethylenschicht ein Copolymer von Ethylen ist, das Propyleneinheiten enthält.

4. Verfahren gemäß einem der Ansprüche 1-3, **dadurch gekennzeichnet, dass** vor dem Aufbringen der koextrudierten Polyethylenschicht (5a) und Polypropylenschicht (5b) eine Grundschicht auf die PET-Folie aufgebracht wird.

5. Verfahren gemäß einem der Ansprüche 1-4, **dadurch gekennzeichnet, dass** der gestanzte Foliendeckel (2) auf eine Polypropylenverpackung (1) geschweißt wird, wobei die Polypropylenschicht (5b) an der Polypropylenverpackung (1) haftet.

6. Verfahren gemäß einem der Ansprüche 1-5, **dadurch gekennzeichnet, dass** der PET-Folie (4) eine Dicke zwischen 23 und 50 µm gegeben wird und dass der koextrudierten Schicht (5) eine Menge zwischen 8 und 20 g/m² gegeben wird, entsprechend einer Dicke zwischen 9 und 22 µm.

7. Verfahren gemäß einem der Ansprüche 1-6, **dadurch gekennzeichnet, dass** der Foliendeckel (2) vor dem Verschließen eines Bechers gestanzt wird und somit der Öffnung des Bechers angepasst ist.

8. Gestanzter Foliendeckel, erhalten durch das Verfahren gemäß einem der Ansprüche 1-7.

9. Verwendung eines gestanzten Deckels, hergestellt durch das Verfahren gemäß einem der Ansprüche 1-8, als Deckel eines Behälters (1) aus Polypropylen, wobei der Foliendeckel (2) vor dem Schweißen an den Behälter (1) in die fertige Form des Foliendeckels (2) gestanzt wird, wobei der Foliendeckel (2) mit der Polypropylenschicht (5b), die eine Schweißschicht bildet, zu dem Behälter (1) zeigend an den Behälter (1) geschweißt wird, wobei für den Deckel bei späterem Trennen von dem Behälter (1) durch einen Zug in dem Foliendeckel (2) bewirkt wird, dass die Polyethylenschicht (5a) an der PET-Folie (4) bleibt und die Polypropylenschicht (5b) an dem Polypropylenbecher (3) bleibt, da die Polyethylen- und Polypropylenschichten (5a und 5b) delaminieren.

## Revendications

1. Procédé de formation d'un opercule découpé par poinçonnage (2) pour des emballages sous la forme de tasses en polypropylène à partir d'une feuille, ladite feuille étant totalement transparente et comprenant une feuille de polyester totalement transparente (4), qui est une feuille PET,
ledit procédé de formation d'un opercule découpé **caractérisé en ce que**,
- ladite feuille est formée par revêtement de la feuille PET totalement transparente (4) avec une couche supplémentaire coextrudée, par coextrusion d'une couche de polyéthylène (5a) et d'une couche de polypropylène (5b) sur ladite feuille PET (4), et dans lequel la coextrusion de la couche de polyéthylène (5a) et de la couche de polypropylène (5b) sur ladite feuille PET (4) a lieu de façon telle que la couche de polyéthylène (5a) est disposée entre la feuille PET (4) et la couche de polypropylène (5b),
- ledit procédé comprenant l'étape consistant à découper par poinçonnage l'opercule (2) à la forme finale de l'opercule (2), de telle sorte que ladite couche de polypropylène (5b) puisse être soudée à ladite tasse de polypropylène, ladite couche de polypropylène adhérant à ladite tasse de polypropylène.

2. Procédé selon la revendication 1, **caractérisé en ce que** la couche de polyéthylène est sous la forme d'un homopolymère ou d'un copolymère d'éthylène.

3. Procédé selon la revendication 2, **caractérisé en ce que** la couche de polyéthylène est sous la forme d'un copolymère d'éthylène contenant des unités de propylène.

4. Procédé selon l'une quelconque des revendications 1 à 3, **caractérisé en ce qu'**une couche d'apprêt est appliquée sur ladite feuille PET avant l'application de la couche de polyéthylène (5a) et de la couche de polypropylène (5b) coextrudées.

5. Procédé selon l'une quelconque des revendications 1 à 4, **caractérisé en ce que** l'opercule découpé par poinçonnage (2) est soudé à un emballage en polypropylène (1), ladite couche de polypropylène (5b) adhérant à l'emballage en polypropylène (1).

6. Procédé selon l'une quelconque des revendications 1 à 5, **caractérisé en ce qu'**on donne à la feuille de PET (4) une épaisseur comprise entre 23 et 50 µm et **en ce qu'**on donne à la couche coextrudée (5) une quantité comprise entre 8 et 20 g/m², correspondant à une épaisseur comprise entre 9 et 22 µm.

7. Procédé selon l'une quelconque des revendications 1 à 6, **caractérisé en ce que** l'opercule (2) est découpé par poinçonnage avant la fermeture d'une tasse et est ainsi adapté en taille et en forme à l'ouverture de la tasse.

8. Opercule découpé par poinçonnage obtenu par le procédé selon l'une quelconque des revendications 1 à 7.

9. Utilisation d'un opercule découpé par poinçonnage formé par le procédé selon l'une quelconque des revendications 1 à 8 comme opercule d'un récipient (1) en polypropylène, l'opercule (2) étant découpé par poinçonnage à la forme finale de l'opercule (2) avant le soudage au récipient (1), ledit opercule (2) étant soudé au récipient (1) avec la couche de polypropylène (5b), qui constitue une couche de soudage, en regard du récipient (1), l'opercule, au moment d'une séparation subséquente du récipient (1) par tirage sur l'opercule (2), amenant la couche de polyéthylène (5a) à rester sur la feuille de PET (4) et la couche de polypropylène (5b) à rester sur la tasse en polypropylène (3), alors que les couches de polyéthylène et de polypropylène (5a et 5b) se délaminent.
